# EUROPEAN PATENT APPLICATION

(11) **EP 1 927 921 A1**
(43) Date of publication of application: **04.06.2008**
(21) Application number: 08150514.1
(22) Date of filing: 26.02.2004
(51) Int. Cl.: G06F 15/16, G06F 9/50

(54) **Communications system providing server load balancing based upon weighted health metrics and related method**

(30) Priority: 08.08.2003 US 493854 P; 13.02.2004 US 779402
(62) Divisional of application: 04715074.3
(71) Applicant: Teamon Systems, Inc., Issaquah, Washington 98027 (US)
(72) Inventor: McCarthy, Steven J., Bellevue, WA 98005 (US); Gardener, Darren L., Issaquah, WA 98029 (US)
(74) Representative: Fennell, Gareth Charles

(57) **Abstract**

A communications system may include a plurality of servers connected together in a network, such as a wide area network (WAN). The servers may be for processing a plurality of different job types having respective different resource usage characteristics associated herewith. Moreover, each server may determine a respective health metric thereof based upon at least one job being processed thereby. Furthermore, each server may also weight the health metric based upon the respective resource usage characteristic of the at least one job. The system may also include a dispatcher for collecting the weighted health metrics from the servers and distributing jobs to the servers based thereon.

## Description

### Field of the Invention

The present invention relates to the field of communications systems, and, more particularly, to server load balancing and related methods.

### Background of the Invention

In a distributed computing environment, jobs are typically spread across all available machines, such as servers, for example, to provide faster processing and throughput. When there is new work to be done, it is desirable to send the new work to a server that is considered to be lightly loaded, as opposed to another server that is more heavily loaded. In a dynamic environment, the load on various servers can change rapidly. Traditional load balancing mechanisms have focused on externally observable characteristics of a server to infer its load.

By way of example, U.S. Patent No. 6,070,191 discloses a server system for processing client requests received over a communication network. The server system includes a cluster of document servers and at least one redirection server. The redirection server receives a client request from the network and redirects it to one of the document servers based upon a set of pre-computed redirection probabilities. Each of the document servers may be an HTTP server that manages a set of documents locally and can service client requests only for the locally-available documents. Documents are distributed across the document servers using a load distribution algorithm. The algorithm uses access rates of the documents as a metric for distributing the documents across the servers and determining the redirection probabilities. The load distribution algorithm attempts to equalize the sum of the access rates of all the documents stored at a given document server across all of the document servers.

Despite such prior art approaches, further load balancing features may be desirable in certain applications. For example, in a network where different servers are called upon to perform different types of tasks with different resource usage characteristics, approaches such as the one described above may not provide desired load balancing results.

### Summary of the Invention

In view of the foregoing background, it is therefore an object of the present invention to provide a communications system which provides enhanced load balancing features and related methods.

This and other objects, features, and advantages in accordance with the present invention are provided by a communications system which may include a plurality of servers connected together in a network, such as a wide area network (WAN). The servers are for processing a plurality of different job types having respective different resource usage characteristics associated therewith. Moreover, each server may determine a respective health metric thereof based upon at least one job being processed thereby. Furthermore, each server may also weight the health metric based upon the respective resource usage characteristic of the at least one job. The system may also include a dispatcher for collecting the weighted health metrics from the servers and distributing jobs to the servers based thereon. Accordingly, jobs may advantageously be distributed to the servers on a relatively equal basis, even though different servers may be performing jobs utilizing different resources.

By way of example, the resource usage characteristics may include at least one processing utilization characteristic and at least one input/output utilization characteristic. Additionally, the servers may map the weighted health metrics for different resource usage characteristics to a common scale. The communications system may also include a knowledge base for cooperating with the dispatcher for storing the weighted health metrics.

In addition, the servers may provide completed job results to the dispatcher, and the weighted health metrics may be provided to the dispatcher with the completed job results. The dispatcher may also periodically poll the servers for the weighted health metrics. The communications system may also include at least one load generator for generating the jobs for the servers and communicating the jobs to the dispatcher. As such, the dispatcher may provide the completed job results to the at least one load generator. The jobs may relate to electronic mail (e-mail) processing, for example.

A method aspect of the invention is for distributing jobs to a plurality of servers connected together in a network. The servers may be for processing a plurality of different job types having respective different resource usage characteristics associated therewith. The method may include determining a respective health metric of each server based upon at least one job being processed thereby, and weighting the health metric based upon the respective resource usage characteristic of the at least one job. Furthermore, the weighted health metrics may be collected from the servers, and the jobs may be distributed to the servers based thereon.

A load distributor in accordance with the present invention may include a dispatcher and a knowledge base, as described briefly above. A computer-readable medium in accordance with the present invention may similarly include a dispatcher module and a knowledge base module.

### Brief Description of the Drawings

FIG. 1 is schematic block diagram of a communications system providing server load balancing in accordance with the present invention

FIG. 2 is a flow diagram illustrating a load balancing method in accordance with the present invention.

### Detailed Description of the Preferred Embodiments

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

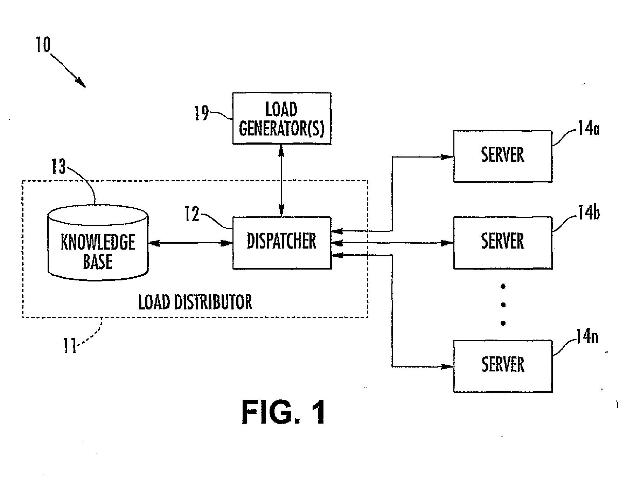

Referring initially to FIG. 1, a distributed network communications system **10** implementing server selection (i.e., load balancing) in accordance with the present invention is now described. The system **10** illustratively includes a load distributor **11,** which includes a dispatcher **12** and a knowledge base **13.** The system **10** also illustratively includes a plurality of servers **14a-14n** for receiving tasks from the dispatcher **12,** and one or more load generators **19** for generating and communicating the tasks to the dispatcher.

By way of example, the load distributor **11** may be implemented as a server or other computer. Accordingly, the dispatcher **12** may be implemented as a software program or module that operates on or in conjunction with the load distributor **11.** The knowledge base **13** may similarly be a database module in a data store or memory accessible by the dispatcher **12.** Of course, the dispatcher **12** and the knowledge base **13** may be implemented in different devices or servers in some embodiments, as will be appreciated by those skilled in the art.

Each server **14a-14n** preferably includes a software agent or module, for example, which measures respective server-specific parameters, and returns a health metric to the dispatcher **12.** The health metric may be mapped to a common scale. By way of example, the health metric may be mapped to a number between zero and one hundred, where zero corresponds to a server **14** being fully loaded (i.e., it is very "unhealthy"), and thus unsuitable for receiving additional tasks to perform. On the other hand, one hundred on the common scale corresponds to a server **14** having no load (i.e., it is performing no jobs and is very "healthy"), meaning that it is well suited for receiving new tasks.

As noted above, the software agent on each server **14a-14n** is responsible for calculating a health metric in accordance with the common scale based upon the various tasks being performed thereon. Yet, different types of tasks may have different resource utilization characteristics associated therewith. As such, the servers **14a-14n** advantageously weight the heath metric thereof based upon the respective resource usage characteristics of the task(s) that it is performing.

Examples of such resource usage characteristics generally include processing utilization characteristics, input/output (I/O) utilization characteristics, and memory utilization characteristics. More particularly, for a server **14** performing processor-intensive tasks, its metric can be weighted more heavily toward processor utilization. Similarly, another server **14** might measure network input and output, and/or a number of "threads" or concurrent network connections in use, and weight its health metric accordingly.

By weighting a server's health metric toward the particular resource usage characteristic(s) being consumed thereon, the dispatcher **12** has a meaningful way to determine the relative health of the servers **14a-14n** and distribute new tasks to the servers based thereon. In contrast, prior art approaches which measure a single resource usage characteristic at each of a plurality of servers may provide an inaccurate view of the servers' health. That is, if a server was performing a very intensive I/O task, a measurement of only the server's memory utilization may errantly indicate that the server is more healthy than it actually is. This problem may still occur even where more than one resource usage characteristic is measured on each server, particularly when numerous tasks types are being processed, as will be appreciated by those skilled in the art.

The dispatcher **12** receives processing jobs or tasks from the load generator(s) **19** and distributes the jobs to each of the servers **14a-14n** based upon the weighted health metrics thereof. The dispatcher **12** may not only use the weighted health metrics to decide which server **14** to distribute a job to, but it may also use them to determine how much work to put in a given job as well, as will be appreciated by those of skill in the art.

When a given server **14** is finished with a job, it preferably reports both job results and its health metric to the dispatcher **12.** The health metric for each server is saved in the knowledge base **10,** where it is available to the dispatcher **12** for use in distributing future jobs. By taking frequent measurements on each server and making them available to the dispatcher **12,** the system **10** load characteristics can be tuned to a very high degree, as will be appreciated by those skilled in the art. The dispatcher **12** may also report job results received from a given server **14** back to the load generator **19** from which the job was received.

It will be appreciated that the load distribution process described above relies upon actual measurements of server loads as measured by the servers **14a-14n.** These measurements provide a more accurate indication of server load than externally observable server characteristics from which server load is inferred in certain prior art load balancing schemes.

Those skilled in the art will appreciate that the system 10 is applicable to many different types of load distribution applications. For example, in an e-mail delivery system, the dispatcher **12** receives e-mail messages for delivery to specified recipients. Delivery jobs are distributed to the servers **14a-14n** based upon their respective health metrics stored in the knowledge base **13,** and job results, along with health metrics, are reported back to the dispatcher **12.** Job results may also be passed back to the load generator **19** from which the job was received. An exemplary load generator **19** may be an e-mail aggregation engine, for example, although other load generators may also be used, as will be appreciated by those skilled in the art.

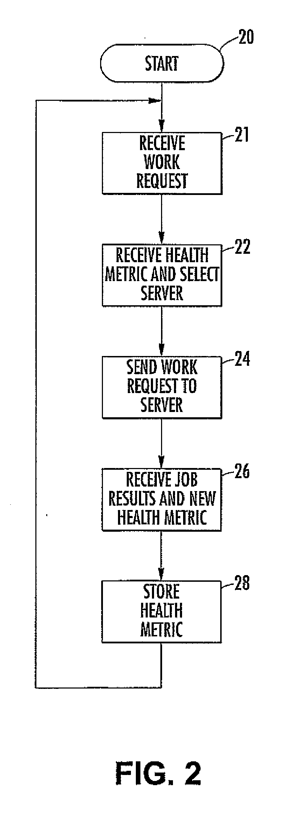

Turning additionally to FIG. 2, a server selection (i.e., load balancing) method in accordance with the invention is now described. Beginning at Block **20,** a job or work request is first received from the load generator **19** at the dispatcher **12,** at Block **21.** Weighted health metrics for the servers **14a-14n** are retrieved from the knowledge base **13,** at Block **22,** and one (or more) of the servers is selected based upon the retrieved health metrics. The job is then sent to the selected server **14,** at Block **24.**

When the selected server **14** has completed the work request, it generates job results and a current health metric for the dispatcher **12,** at Block **26.** The current weighted health metric is then stored in the knowledge base **13,** at Block **28,** at which point the process repeats itself, as illustratively shown. It should be noted that a particular job result may also be returned to the respective load generator **19** from which the job was received, as noted above. It should also be noted that the selected server **14** need not wait until completing a job before generating a current health metric for the dispatcher **12.** For example, the dispatcher **12** could poll the servers **14a-14n** for this information periodically, or they could be configured to simply provide it to the dispatcher at predetermined intervals, etc.

While e-mail jobs were discussed above as an example of the types of jobs to be performed by the server **14a-14n**, numerous other types of jobs or tasks may also be distributed to the servers, as will be appreciated by those skilled in the art. Moreover, it will further be appreciated that other types of health metrics and methods for determining and weighting thereof may also be used.

Furthermore, it should also be noted that while health metric calculation has been described above as being performed by a software agent on each server **14,** it is contemplated that health metric calculation may be performed by other system components. By way of example, such calculations may be performed by the dispatcher **12** in certain embodiments, based upon measurements of server characteristics that are returned to a health metric calculation component thereof.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

One aspect of this disclosure provides a communications system comprising: a plurality of servers connected together in a network for processing a plurality of different job types having respective different resource usage characteristics associated therewith; each server determining a respective health metric thereof based upon at least one job being processed thereby and weighting the health metric based upon the respective resource usage characteristic of the at least one job; and a dispatcher for collecting the weighted health metrics from said servers and distributing jobs to said servers based thereon.

The resource usage characteristics may comprise at least one processing utilization characteristic and at least one input/output utilization characteristic.

The communications system may further comprise a knowledge base for cooperating with said dispatcher for storing the weighted health metrics.

Said servers may map the weighted health metrics for different resource usage characteristics to a common scale.

Said servers may provide completed job results to said dispatcher, wherein the weighted health metrics are provided to said dispatcher with the completed job results.

The communications system may further comprise at least one load generator for generating the jobs for said servers and communicating the jobs to said dispatcher; and wherein said dispatcher further provides the completed job results to said at least one load generator.

Said dispatcher may periodically poll said servers for the weighted health metrics.

The jobs may relate to electronic mail (e-mail) processing.

Another aspect of this disclosure provides a load distributor for a plurality of servers connected together in a network for processing a plurality of different job types having respective different resource usage characteristics associated therewith, and each server determining a respective health metric thereof based upon at least one job being processed thereby and weighting the health metric based upon the respective resource usage characteristic of the at least one job, the load distributor comprising: a dispatcher for collecting the weighted health metrics from the servers and distributing jobs to the servers based thereon; and a knowledge base for cooperating with said dispatcher for storing the weighted health metrics.

The resource usage characteristics may comprise at least one processing utilization characteristic and at least one input/output utilization characteristic.

The servers may map the weighted health metrics for different resource usage characteristics to a common scale.

The servers may provide completed job results to said dispatcher module, wherein the weighted health metrics are provided to said dispatcher with the completed job results.

Said dispatcher may periodically poll the servers for the weighted health metrics.

Another aspect of this disclosure provides a job distribution method for a plurality of servers connected together in a network, the servers for processing a plurality of different job types having respective different resource usage characteristics associated therewith, the method comprising: determining a respective health metric of each server based upon at least one job being processed thereby and weighting the health metric based upon the respective resource usage characteristic of the at least one job; and distributing jobs to the servers based upon the weighted health metrics.

The resource usage characteristics may comprise at least one processing utilization characteristic and at least one input/output utilization characteristic.

The method may further comprise mapping the weighted health metrics for different resource usage characteristics to a common scale; and wherein distributing jobs to the servers comprises distributing the jobs based upon the commonly scaled weighted health metrics.

Another aspect of this disclosure provides a computer-readable medium having computer-executable instructions for distributing jobs to a plurality of servers connected together in a network for processing a plurality of different job types having respective different resource usage characteristics associated therewith, and each server determining a respective health metric thereof based upon at least one job being processed thereby and weighting the health metric based upon the respective resource usage characteristic of the at least one job, the load distributor comprising: a dispatcher module for collecting the weighted health metrics from the servers and distributing jobs to the servers based thereon; and a knowledge base module for cooperating with said dispatcher module to store the weighted health metrics.

The resource usage characteristics may comprise at least one processing utilization characteristic and at least one input/output utilization characteristic.

The servers may map the weighted health metrics for different resource usage characteristics to a common scale.

The servers may provide completed job results to said dispatcher module, wherein the weighted health metrics are provided to said dispatcher module with the completed job results.

Said dispatcher module may periodically poll the servers for the weighted health metrics.

## Claims

1. A communications system comprising:
a plurality of servers connected together in a network for processing different jobs among a plurality of different job types having different resource usage characteristics associated therewith;
each server adapted to determine a respective health metric thereof based upon at least one job being processed thereby and adapted to weight the health metric by assigning a relative weight to each of the different jobs on the plurality of servers and mapping the relative weights to a shared common scale based upon the respective resource usage characteristic of the at least one job; and
dispatcher means for collecting the weighted health metrics from said servers and distributing jobs to said servers based thereon.

2. The communications system of Claim 1 wherein the resource usage characteristics comprise at least one processing utilization characteristic and at least one input/output utilization characteristic.

3. The communications system of Claim 1 further comprising a knowledge base for cooperating with said dispatcher for storing the weighted health metrics.

4. The communications system of Claim 1 wherein said servers are adapted to provide completed job results to said dispatcher, and wherein the weighted health metrics are provided to said dispatcher with the completed job results.

5. The communications system of Claim 4 further comprising at least one load generator for generating the jobs for said servers and communicating the jobs to said dispatcher; and wherein said dispatcher further provides the completed job results to said at least one load generator.

6. The communications system of Claim 1 wherein said dispatcher periodically polls said servers for the weighted health metrics.

7. The communications system of Claim 1 wherein the jobs relate to electronic mail (e-mail) processing.

8. A load distributor for a plurality of servers connected together in a network for processing a plurality of different jobs among a plurality of different job types having respective different resource usage characteristics associated therewith, and each server adapted to determine a respective health metric thereof based upon at least one job being processed thereby and adapted to weight the health metric by assigning a relative weight to each of the different jobs on the plurality of servers and mapping the relative weights to a shared common scale based upon the respective resource usage characteristic of the at least one job, the load distributor comprising:
dispatcher means for collecting the weighted health metrics form the servers and distributing jobs to the servers based thereon; and
knowledge base means for cooperating with said dispatcher for storing the weighted health metrics.

9. The load distributor of Claim 8 wherein the resource usage characteristics comprise at least one processing utilization characteristic and at least one input/output utilization characteristic.

10. The load distributor of Claim 8 wherein the servers are adapted to provide completed job results to said dispatcher module, and wherein the weighted health metrics are provided to said dispatcher with the completed job results.

11. The load distributor of Claim 8 wherein said dispatcher is adapted to periodically poll the servers for the weighted health metrics.

12. A job distributor method for plurality of servers connected together in a network, there servers for processing a plurality of different jobs among a plurality of different job types having respective different resource usage characteristics associated therewith, the method comprising:
determining a respective health metric of each server based upon at least one job being processed thereby and weighting the health metric by assigning a relative weight to the different jobs on the plurality of servers and mapping the relative weight to a shared common scale based upon the respective resource usage characteristic of the at least one job; and
distributing jobs to the servers based upon the weighted health metrics.

13. The method of Claim 12 wherein the resource usage characteristics comprise at least one processing utilization characteristic and at least one input/output utilization characteristic.

14. A computer-readable medium having computer-executable instructions for distributing jobs to a plurality of servers connected together in a network for processing different jobs among a plurality of different job types having respective different resource usage characteristics associated therewith, and each server determining a respective health metric thereof based upon at least one job being processed there by and weighting the health metric by assigning a relative weight to each of the different jobs on the plurality of servers and mapping the relative weights to each of a shared common scale based upon the respective resource usage characteristic of the at least one job, the load distributor comprising:
a dispatcher module for collecting the weighted health metrics from the servers and distributing jobs to there servers based thereon; and
a knowledge base module for cooperating with said dispatcher module to store the weighted health metrics.

15. The computer-readable medium of Claim 14 wherein the resource usage characteristics comprise at least one processing utilization characteristic and at least one input/output utilization characteristic.

16. The computer-readable medium of Claim 14 wherein the servers map the weighted health metrics for different resource usage characteristics to a common scale shared by the plurality of servers.

17. The computer-readable medium of Claim 14 wherein there servers provide completed job results to said dispatcher module, and wherein the weighted health metrics are provided to said dispatcher module with the completed job results.

18. The computer-readable medium of Claim 14 wherein said dispatcher module periodically polls the servers for the weighted health metics.
